# EUROPÄISCHE PATENTSCHRIFT

(11) **EP 3 270 034 B1**
(45) Veröffentlichungstag und Bekanntmachung des Hinweises auf die Patenterteilung: **02.09.2020**
(21) Anmeldenummer: 17179795.4
(22) Anmeldetag: 05.07.2017
(51) Int. Cl.: F17C 13/00, B01D 25/00, B01D 27/00

(54) **FLÜSSIGGASANLAGE**
LPG ASSEMBLY
INSTALLATION DE GAZ LIQUIDE

(30) Priorität: 13.07.2016 DE 102016112888
(43) Veröffentlichungstag der Anmeldung: 17.01.2018
(73) Patentinhaber: Truma Gerätetechnik GmbH & Co. KG, 85640 Putzbrunn (DE)
(72) Erfinder: Markus, Jäger, 85635 Höhenkirchen-Siegertsbrunn (DE)
(74) Vertreter: Prinz & Partner mbB

(56) Entgegenhaltungen:
- EP-A2- 0 312 457
- EP-A2- 1 760 390
- WO-A1-2006/136409
- DE-A1- 4 012 122
- DE-A1- 10 100 659
- DE-U1- 8 815 256
- FR-A1- 2 898 964
- US-A- 5 271 232
- US-A1- 2002 023 677
- US-A1- 2004 035 480
- US-A1- 2007 204 858
- US-A1- 2012 060 583
- US-A1- 2014 196 788

## Beschreibung

Die Erfindung betrifft eine Flüssiggasanlage für mobile Anwendungen, beispielsweise für einen Wohnwagen, einen Caravan, ein Motorboot, etc.

Mit der Flüssiggasanlage können gasbetriebene Verbraucher versorgt werden, beispielsweise ein Gasherd oder eine Gasheizung.

Im Hinblick auf verschiedene Anforderungen, die an eine solche Flüssiggasanlage gestellt werden, ist eine große Anzahl von unterschiedlichen Bauteilen erforderlich, die alle an geeigneter Stelle untergebracht werden müssen. Wenn die Flüssiggasanlage zwei Gasflaschen aufweist, zwischen denen automatisch umgeschaltet wird, wird ein automatischer Umschalter verwendet, der beispielsweise beim Absinken des Drucks in der Flasche, aus der gerade Gas entnommen wird (also aus der "Betriebs-Gasflasche"), auf eine zweite Flasche ("Reserve-Gasflasche") umschaltet.

Wenn die Gasheizung bzw. das Gasversorgungssystem während der Fahrt des Campers betrieben werden soll, muss eine Einrichtung vorhanden sein, die bei einem Abriss einer Gasleitung durch einen Unfall die Gaszufuhr absperrt. Die kann beispielsweise durch einen Crashsensor bewerkstelligt werden, der beim Überschreiten einer gewissen Verzögerung automatisch die Gaszufuhr unterbricht. Weiterhin werden häufig Filter und Abscheider verwendet, um ölhaltige Aerosole aus dem Gasstrom zu entfernen, damit die Funktion des Gasdruckreglers nicht beeinträchtigt wird.

Dokument EP 1 760 390 A2 betrifft eine Vorrichtung und ein Verfahren zur Sicherheitsabsperrung einer Flüssiggasanlage für Fahrzeuge oder Fahrzeuganhänger zur Vermeidung einer ungewollten Freisetzung von Gas im Falle eines Unfalles des Fahrzeugs oder Fahrzeuganhängers. Zu diesem Zweck ist eine Sicherheitsabsperreinrichtung für die Flüssiggasanlage vorgesehen, die ein elektromagnetisches Gasventil zur Gaszufuhr-Absperrung, eine Elektronikeinheit zur Ansteuerung des elektromagnetischen Gasventils und mindestens ein Sensor zur Ermittlung eines Unfalls vorgesehen.

Die Aufgabe der Erfindung besteht darin, eine Flüssiggasanlage zu schaffen, die weniger Bauraum erfordert und einem Benutzer einen höheren Komfort bietet.

Zur Lösung dieser Aufgabe ist erfindungsgemäß eine Flüssiggasanlage für mobile Anwendungen vorgesehen, mit mindestens einem Magnetventil (auch als Gasfernschalter bekannt), das an einer Flüssiggasflasche montierbar ist, einem Gasregler, an dessen Hochdruckseite das Magnetventil angeschlossen ist, einem Verteilerblock, dessen Eingang an den Niederdruckausgang des Gasreglers angeschlossen ist, einer Filtereinheit, die zwischen dem Niederdruckausgang des Gasdruckreglers und dem Verteilerblock angeordnet ist, und einer elektronischen Steuerung, die mit dem Magnetventil in Verbindung steht, wobei auf der Niederdruckseite der Flüssiggasanlage ein Heizelement und ein Sensor vorgesehen sind, wobei der Sensor ein Temperatursensor ist, und wobei in der Steuerung verschiedene Abkühlkurven hinterlegt sind und die Steuerung eine gemessene Abkühlkurve mit den hinterlegten Abkühlkurven vergleichen kann, um die Flüssiggasanlage auf Dichtigkeit zu prüfen.

Diese Flüssiggasanlage zeichnet sich dadurch aus, dass weniger unterschiedliche Bauteile erforderlich sind, um eine Flüssiggasflasche (oder bei einer Anlage mit zwei Flüssiggasflaschen auch zwei Flaschen) anzuschließen. Durch die Verwendung von Magnetventilen als Gasfernschalter kann ein automatischer Umschalter eingespart werden, der noch dazu üblicherweise im Flaschenkasten für die Flüssiggasflaschen angebracht sein muss. Zusätzlicher Platz im Flaschenkasten wird dadurch geschaffen, dass auf der Hochdruckseite der Flüssiggasanlage kein Filter vorhanden ist.

Ein besonderes Merkmal der erfindungsgemäßen Flüssiggasanlage besteht darin, dass auf der Hochdruckseite keinerlei besondere Vorkehrungen getroffen werden, um die Gasanlage vor Verunreinigungen zu schützen (beispielsweise ölhaltigen Aerosolen), die zusammen mit dem Flüssiggas in die Flüssiggasanlage gelangen können. Im Stand der Technik werden entweder dem Gasregler Filter und Abscheider vorgeschaltet, um zu verhindern, dass diese Verunreinigungen zum Gasdruckregler gelangen, oder zumindest müssen die Gasdruckschläuche zum Gasdruckregler hin stetig ansteigend geführt werden, damit möglichst wenig Verunreinigungen hin zum Gasdruckregler gelangen. Erfindungsgemäß werden Verunreinigungen erst auf der Niederdruckseite herausgefiltert bzw. abgeschieden. Somit wird der Platz im Flaschenkasten nicht noch weiter verringert.

Zudem kann bei der erfindungsgemäßen Flüssiggasanlage mit vergleichsweise geringem Aufwand eine Dichtigkeitsprüfung der Flüssiggasanlage vorgenommen werden. So wird in einem Zustand, in dem kein Verbraucher Gas verbraucht, das Heizelement aktiviert. Nach Abschalten des Heizelements kann mittels des Sensors ein charakteristischer Parameter überwacht werden, insbesondere den Verlauf der Temperatur über der Zeit. Dieser charakteristische Parameter verhält sich bei einer dichten Flüssiggasanlage anders als bei einer Flüssiggasanlage, in der ein Leck vorhanden ist.

Falls die Flüssiggasanlage undicht ist und daher Gas aus der Flüssiggasflasche in die Anlage nachströmt, sinkt die Temperatur nach dem Abschalten des Heizelementes schneller ab, als dies bei einer dichten Flüssiggasanlage der Fall ist.

Es kann auch vorgesehen sein, dass beim Vergleich mit der Abkühlkurve die Umgebungstemperatur der Flüssiggasanlage mitberücksichtigt wird.

Gemäß einer Ausführungsform der Erfindung ist vorgesehen, dass die Filtereinheit einen Einwegfilter enthält. Dieser kann vom Benutzer bei Bedarf einfach ausgetauscht werden, sodass die Filterleistung mit geringem Aufwand wieder hergestellt wird.

Der Einwegfilter kann beispielsweise eine Filterpatrone sein, die von einem Benutzer in eine geeignete Aufnahme eingesetzt wird, ohne dass er dabei mit den abgeschiedenen Substanzen in direkten Kontakt kommt.

Gemäß einer bevorzugten Ausführungsform der Erfindung ist ein Sensor für die Verschmutzung des Einwegfilters vorgesehen. Dies ermöglicht es, die verbleibende Filterkapazität des Filters in Erfahrung zu bringen, ohne dass der Benutzer den Filter selbst inspizieren muss.

Der Verschmutzungssensor kann beispielsweise einen RFID-Chip enthalten, der in den Einwegfilter integriert ist. Dies ermöglicht es, den Verschmutzungsgrad berührungslos abzufragen.

Der Verschmutzungssensor kann bei einer Ausführungsform mit der Steuerung der Flüssiggasanlage in Verbindung stehen. Die Steuerung kann einem Benutzer anzeigen, welche Kapazität noch im Filter verbleibt. Die Steuerung kann auch auf der Basis der bisherigen Zunahme der Verschmutzung des Filters hochrechnen, wann eine neue Filterpatrone eingesetzt werden muss. Es ist auch möglich, dass die Steuerung einen Benutzer daran erinnert, rechtzeitig eine Ersatz-Filterpatrone zu beschaffen. Weiterhin ist denkbar, dass die Steuerung automatisiert eine Nachbestellung auslöst.

Gemäß einer bevorzugten Ausführungsform der Erfindung ist die Filtereinheit in den Verteilerblock integriert. Es ist dann nicht notwendig, die Filtereinheit separat zu montieren. Außerdem ist der Verteilerblock üblicherweise an einer zumindest einigermaßen gut zugänglichen Stelle montiert, sodass damit auch die Filtereinheit zugänglich ist.

Unter einem Verteilerblock wird dabei die Kombination von mehreren Schnellschlussventilen verstanden, die als Absperrventil für einzelne Gasgeräte dienen.

Vorzugsweise ist auf der Hochdruckseite der Flüssiggasanlage ein zweiter Hochdruckschlauch angeschlossen, der zu einem zweiten Magnetventil führt, das als Gasfernschalter dient. Dies ermöglicht es, eine zweite Druckgasflasche anzuschließen, sodass immer eine Betriebsflasche und eine Reserveflasche im System vorhanden sind.

Die beiden Hochdruckschläuche sind dabei vorzugsweise an die beiden Eingänge eines T-Stücks angeschlossen, dessen Ausgang an den Hochdruckeingang des Gasdruckreglers angeschlossen ist. Hierdurch ergibt sich ein mechanisch einfacher Aufbau der Flüssiggasanlage.

In der Flüssiggasanlage kann ein elektronischer Crashsensor vorgesehen sein, der mit der Steuerung in Verbindung steht. Der Crashsensor ermöglicht es, die Flüssiggasanlage auch dann zu betreiben, wenn das Fahrzeug bewegt wird. Sollte es zu einem Unfall kommen, spricht der Crashsensor an, sodass die Steuerung die beiden Gasfernschalter absperrt. Dadurch ist die Sicherheit gewährleistet.

In einer Alternative kann auch eine Schnittstelle vorgesehen sein, mittels der die Flüssiggasanlage das Signal des Crashsensors "anzapfen" kann, der in dem Fahrzeug verbaut ist, das mit der Flüssiggasanlage ausgestattet ist. Somit muss für die Flüssiggasanlage kein eigener Crashsensor vorgesehen sein.

Gemäß einer bevorzugten Ausführungsform der Erfindung ist ein Gasfüllstandsmessgerät vorgesehen. Dieser Füllstandmesser ist vorzugsweise unmittelbar an der Flüssiggasflasche angebracht, beispielsweise an deren Boden, sodass ein Benutzer jederzeit den Füllstand der entsprechenden Flüssiggasflasche abfragen kann.

Vorzugsweise steht das Gasfüllstandsmessgerät mit der Steuerung in Verbindung. Dies ermöglicht es der Steuerung, automatisch von einer Betriebs-Flüssiggasflasche auf eine Reserve-Flüssiggasflasche umzuschalten, wenn der Vorrat aus der Betriebs-Flüssiggasflasche aufgebracht ist. Die Steuerung kann auch einem Benutzer rechtzeitig anzeigen, dass der Vorrat der Betriebs-Flüssiggasflasche demnächst aufgebraucht und auf die Reserve-Flüssiggasflasche umgeschaltet wurde, sodass der Benutzer rechtzeitig eine neue Flüssiggasflasche beschaffen und anschließen kann. Die Steuerung kann dem Benutzer auch eine Prognose errechnen, wie lange der Flüssiggasvorrat noch ausreicht, wenn davon ausgegangen wird, dass der Gasverbrauch auf dem bisherigen Niveau bleibt.

Gemäß einer Ausführungsform der Erfindung ist am Gasdruckregler eine Heizvorrichtung vorgesehen, die mit der Steuerung verbunden ist. Mit der Heizvorrichtung kann das Vereisen des Gasdruckreglers verhindert werden. Dies ist insbesondere beim Wintercamping relevant.

Vorzugsweise ist der Heizvorrichtung ein Temperatursensor zugeordnet, der mit der Steuerung verbunden ist. Dies ermöglicht es, die Heizvorrichtung automatisch dann einzuschalten, wenn die Außentemperatur eine vorbestimmte Schwelle unterschreitet.

Gemäß einer Ausgestaltung der Erfindung weist die Steuerung eine Nahfeldkommunikationsschnittstelle auf, beispielsweise nach dem Bluetooth- oder WLAN-Standard. Dies ermöglicht es einem Benutzer, die Flüssiggasanlage mit seinem Smartphone zu steuern und die für ihn relevanten Werte abzufragen, beispielsweise den Vorrat an Flüssiggas. Weiterhin kann der Benutzer einen Dichtigkeitstest auslösen.

Die Steuerung weist vorzugsweise auch eine Fernkommunikationsschnittstelle auf, mit der beispielsweise eine SMS versendet werden kann. Auf diese Weise kann ein Benutzer auch dann, wenn er sich nicht in der Nähe der Flüssiggasanlage befindet, über bestimmte Dinge informiert werden, beispielsweise, dass der Flüssiggasvorrat einen bestimmten Wert unterschreitet.

Gemäß einer Ausführungsform ist vorgesehen, dass der Gasfernschalter unmittelbar an den Eingang des Gasdruckreglers angeschlossen ist. Bei dieser Ausgestaltung kann auf einen Hochdruckschlauch verzichtet werden.

Gemäß einer Ausgestaltung ist vorgesehen, dass der Gasfernschalter mittels eines Hochdruckschlauchs an den Eingang des Gasdruckreglers angeschlossen ist. Hierdurch ergibt sich eine höhere Flexibilität bei der Anordnung des Gasdruckreglers.

Wenn ein Hochdruckschlauch verwendet wird, kann dieser mit einer Schlauchbruchsicherung versehen sein, um die Betriebssicherheit zu erhöhen.

Es ist auch möglich, dass bei einer Flüssiggasanlage mit zwei Gasflaschen eine der Gasflaschen direkt an den Gasdruckregler angeschlossen wird und die andere mittels eines Hochdruckschlauchs. In jedem Fall wird unmittelbar an jeder Gasflasche ein Gasfernschalter (ein Magnetventil) verwendet, um im Bedarfsfall die Gasflasche zuverlässig und schnell absperren zu können.

Die Erfindung wird nachfolgend anhand verschiedener Ausführungsbeispiele erläutert, die in den beigefügten Zeichnungen erläutert sind. In den Zeichnungen zeigen:

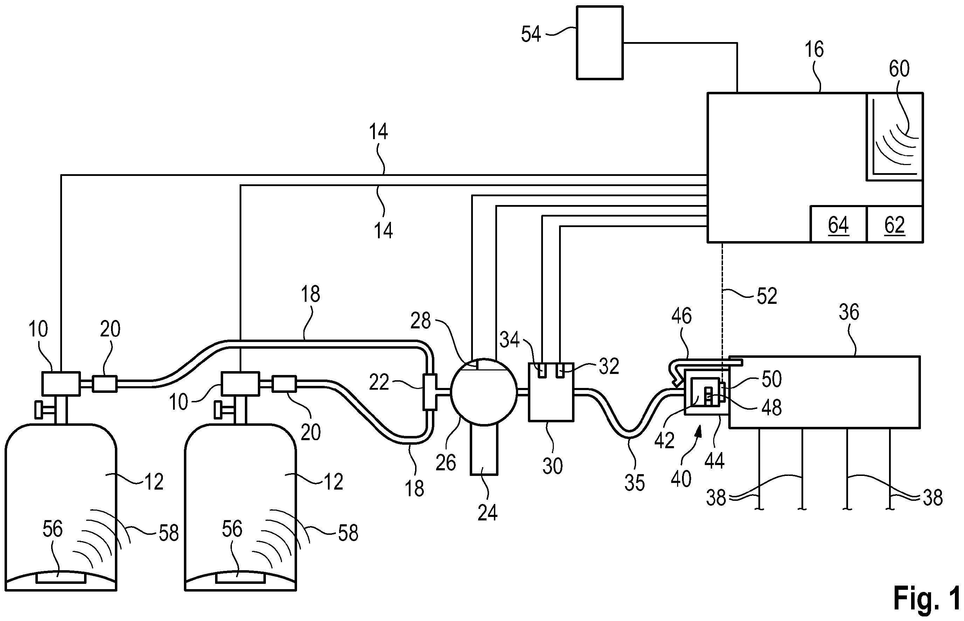

Figur 1 schematisch eine Flüssiggasanlage gemäß einer ersten Ausführungsform der Erfindung;
Figur 2 schematisch eine Flüssiggasanlage gemäß einer zweiten Ausführungsform der Erfindung; und
Figur 3 schematisch eine Flüssiggasanlage gemäß einer dritten Ausführungsform der Erfindung.

Die Flüssiggasanlage weist zwei Gasfernschalter 10 auf, an die jeweils eine Flüssiggasflasche 12 angeschlossen ist. Bei den Flüssiggasflaschen handelt es sich um Druckbehälter, die mit unter Druck stehendem Flüssiggas (LPG) gefüllt sind, beispielsweise mit Propan und Butan. Es handelt sich hier um übliche Flüssiggasflaschen (meist Propan/Butan-Gasflaschen), die von einem Benutzer getragen und ausgetauscht werden können.

Bei den Gasfernschaltern 10 handelt es sich um Magnetventile, die im stromlosen Zustand geschlossen sind. Um sie zu öffnen, muss eine (hier nicht gezeigte) Magnetspule bestromt werden. Dies erfolgt über hier schematisch dargestellte Steuerleitungen 14, die an eine Steuerung 16 angeschlossen sind.

An den Ausgang der Gasfernschalter 10 ist jeweils ein Hochdruckschlauch 18 angeschlossen, der mit einer Schlauchbruchsicherung 20 versehen ist. Die Schlauchbruchsicherung 20 arbeitet mechanisch und gewährleistet, dass kein Gas ausströmen kann, wenn die ausströmende Gasmenge (aufgrund eines Lecks) einen vordefinierten Volumendurchsatz überschreitet.

Die Hochdruckschläuche 18 sind an die beiden Eingänge eines T-Stücks 22 angeschlossen, dessen Ausgang an den Hochdruckeingang eines Gasdruckreglers 24 angeschlossen ist.

Der Gasdruckregler 24 verringert den Druck auf der Hochdruckseite der Flüssiggasanlage, also den Flaschendruck, auf den deutlich niedrigeren Druck auf der Niederdruckseite, beispielsweise auf 30 mbar.

Es hat sich herausgestellt, dass übliche Gasdruckregler, wenn sie in einer modernen Gasanlage mit einer gut gewarteten Gasflasche verwendet werden, gegenüber den dann noch eventuell auftretenden Verschmutzungen ausreichend unempfindlich sind.

Dem Gasdruckregler 24 ist eine Heizvorrichtung 26 zugeordnet, die von der Steuerung 16 angesteuert werden kann. Weiterhin ist ein Temperatursensor 28 vorgesehen, der ebenfalls an die Steuerung 16 angeschlossen ist.

Auf der Niederdruckseite des Gasdruckreglers 24 ist in unmittelbarer Nähe zum Gasdruckregler eine Dichtigkeitsprüfeinheit 30 vorgesehen, die ein Heizelement 32 und einen Sensor 34 aufweist. Der Sensor ist beim gezeigten Ausführungsbeispiel ein Temperatursensor.

Sowohl das Heizelement 32 als auch der Sensor 34 sind an die Steuerung 16 angeschlossen.

Von der Dichtigkeitsprüfeinheit 30 aus wird das Gas über eine Niederdruckleitung 35 zu einem Verteilerblock 36 geführt, an den dann über separat absperrbare Leitungen 38 die einzelnen Verbraucher angeschlossen sind, beispielsweise ein Gasherd, ein Brenner einer Heizungsanlage, ein Brenner eines Kühlschranks, etc. In den Verteilerblock 36 ist eine Filtereinheit 40 integriert, die dazu dient, Verunreinigungen zurückzuhalten, bevor das Gas zu den Verbrauchern geführt wird. Bei den Verunreinigungen kann es sich insbesondere um ölhaltige Aerosole handeln. Es kann auch ein Abscheider vorgesehen sein, um Feuchtigkeit abzuscheiden.

In der Filtereinheit 40 ist ein Einwegfilter in der Form einer Filterpatrone 42 angeordnet. Die Filterpatrone 42 ist in einem Filtergehäuse 44 aufgenommen, das von einem Benutzer mit geringem Aufwand (insbesondere ohne Werkzeug) geöffnet und wieder geschlossen werden kann. Zu diesem Zweck ist hier schematisch ein Klemmmechanismus 46 angedeutet, der ähnlich wie eine Schnellschlussverbindung bei einer Unterbrechung der Verbindung selbsttätig absperrt..

Seitlich an der Filterpatrone 42 ist ein Sichtfenster 48 vorhanden, sodass ein Benutzer jederzeit sehen kann, wie viel Filterkapazität noch verbleibt (oder anders ausgedrückt, wie stark die Filterpatrone durch zurückgehaltene Verunreinigungen bereits aufgebraucht ist).

Die Filterpatrone 42 ist weiterhin mit einem Verschmutzungssensor 50 versehen, der den Grad der Verschmutzung des Filters und dementsprechend die verbleibende Filterkapazität erkennen kann.

In den Verschmutzungssensor 50 ist auch ein (hier nicht gezeigter) RFID-Chip integriert, der von der Steuerung 16 angesprochen werden kann. Dies ist hier durch die gestrichelt dargestellte Kommunikationsleitung 52 symbolisiert.

Die Flüssiggasanlage verfügt weiterhin über einen Crashsensor 54, der elektronisch arbeitet und mit der Steuerung 16 in Verbindung steht.

Jeder der Flüssiggasflaschen 12 ist ein Füllstandsmesser 56 zugeordnet, mit dem der Füllstand der entsprechenden Flüssiggasflasche 12 erfasst werden kann.

Die Füllstandsmesser 56 arbeiten vorzugsweise mit Ultraschall, der von einem Piezoelement erzeugt und in die Wandung der Flüssiggasflasche 12 eingekoppelt wird. Im gezeigten Ausführungsbeispiel sind die Füllstandsmesser 56 auf der Unterseite der Flüssiggasflaschen 12 am Boden angeordnet. Auf der Basis einer Messung der Laufzeit der eingekoppelten Ultraschallsignale, bis sie an der Grenzfläche flüssig-gasförmig reflektiert und wieder vom Piezoelement empfangen werden, kann der Füllstand der entsprechenden Flüssiggasflasche zuverlässig bestimmt werden. Dieser Füllstand kann an die Steuerung 16 gesendet bzw. von dieser abgefragt werden. Dies kann drahtlos mittels eines geeigneten Kommunikationsprotokolls erfolgen, beispielsweise im Bluetooth-Standard. Die Kommunikationsverbindung ist hier schematisch mit dem Bezugszeichen 58 angedeutet.

Die Steuerung 16 verfügt über eine Nahfeldkommunikationsschnittstelle 60, die beispielsweise nach dem Bluetooth- und/oder dem WLAN-Standard arbeiten kann. Mit der Nahfeldkommunikationsschnittstelle 60 können die Füllstandsmesser 56 abgefragt werden. Sie können auch dazu verwendet werden, die Kommunikation zu dem Smartphone eines Bedieners zu etablieren, wenn sich dessen Smartphone in der Nähe der Steuerung 16 befindet.

Die Steuerung 16 verfügt außerdem über eine Fernkommunikationsschnittstelle 62, die in der Lage ist, über ein Mobilfunknetz und/oder eine Internetverbindung zu kommunizieren, beispielsweise per SMS, wenn sich ein Benutzer nicht in der Nähe der Steuerung 16 befindet.

Mit der Steuerung 16 und den weiteren Komponenten der Flüssiggasanlage kann diese sowohl sicher als auch komfortabel betrieben werden.

Mit den Gasfernschaltern 10 kann mit geringem Aufwand von einer Gasflasche auf die andere Gasflasche umgeschaltet werden. Dies kann von der Steuerung automatisch dann vorgenommen werden, wenn der Füllstand derjenigen Flüssiggasflasche 12, mit der die Flüssiggasanlage aktuell betrieben wird, unter einen bestimmten Wert abfällt. Bereits vorher oder spätestens zu diesem Zeitpunkt kann ein Benutzer darüber informiert werden, dass nun die bisherige Reserve-Flüssiggasflasche 12 die Gasversorgung übernimmt und deshalb eine neue Flüssiggasflasche 12 beschafft werden sollte.

Die Gasfernschalter 10 gewährleisten aufgrund ihres Aufbaus auch, dass die beiden Flüssiggasflaschen 12 von der Anlage getrennt werden, wenn kein Strom am System anliegt, also beispielsweise ein Campingmobil vorübergehend stillgelegt und deswegen die Batterie abgeklemmt wird.

Die Heizvorrichtung 26 gewährleistet, dass der Gasdruckregler 24 auch bei niedrigen Umgebungstemperaturen nicht vereist und daher die Flüssiggasanlage beispielsweise auch im Winter zuverlässig betrieben werden kann.

Die Dichtigkeitsprüfeinheit 30 ermöglicht es einem Bediener, mit sehr geringem Aufwand eine automatisierte Dichtigkeitsprüfung vorzunehmen. Zu diesem Zweck steuert die Steuerung 16 das Heizelement 32 an, bis eine gewisse Temperatur innerhalb der Dichtigkeitsprüfeinheit 30 erreicht ist. Anschließend wird über den Temperatursensor 34 das Abkühlverhalten erfasst. Die aufgenommene Abkühlkurve wird mit hinterlegten Abkühlkurven 60 in der Steuerung 16 verglichen. Wenn die Flüssiggasanlage dicht ist, verringert sich die Temperatur vergleichsweise langsam. Wenn die Flüssiggasanlage nicht dicht ist, also Gas aus einer Flüssiggasflasche 12 ins System nachströmt, fällt die Temperatur dort schneller ab, als dies bei einer dichten Flüssiggasanlage der Fall ist. Dementsprechend kann die Steuerung 16 erkennen, dass anscheinend eine Undichtigkeit vorliegt. In diesem Fall kann der Benutzer von der Steuerung 16 entsprechend informiert werden, und die Steuerung 16 kann über die beiden Gasfernschalter 10 die beiden Flüssiggasflaschen 12 abschalten. Die Abschaltung wird erst wieder aufgehoben, wenn ein Servicetechniker bestätigt, dass die Gasanlage repariert wurde. In diesem Fall würde vom Servicetechniker eine erneute Dichtigkeitsprüfung ausgelöst. Dazu schaltet die Steuerung 16 den Gasfernschalter an und gibt damit die Gasanlage frei, so dass die Messung beginnen kann.

Aufgrund des elektrischen Crashsensors 54 ist es auch zulässig, die Flüssiggasanlage beispielsweise in einem Camper zu betreiben, wenn dieser sich in Fahrt befindet. Die Steuerung 16 kann nämlich über die Gasfernschalter 10 die Gaszufuhr sofort unterbrechen, wenn über den Crashsensor 54 eine Verzögerung erfasst wird, die auf einen Unfall hindeutet.

Mit der Filtereinheit 40 kann gewährleistet werden, dass die Verbraucher zuverlässig vor Verunreinigungen geschützt werden, die sich im Gas befinden. Durch den der Filterpatrone 42 zugeordneten Verschmutzungssensor kann ein Benutzer jederzeit ersehen, wie viel Filterkapazität noch verbleibt und wann eine neue Filterpatrone eingesetzt werden muss. Diese kann aufgrund des besonderen Aufbaus der Filtereinheit 40 ohne Werkzeug und mit geringem Aufwand eingesetzt werden, sodass die Anlage nach einem Filterwechsel unmittelbar wieder einsatzbereit ist.

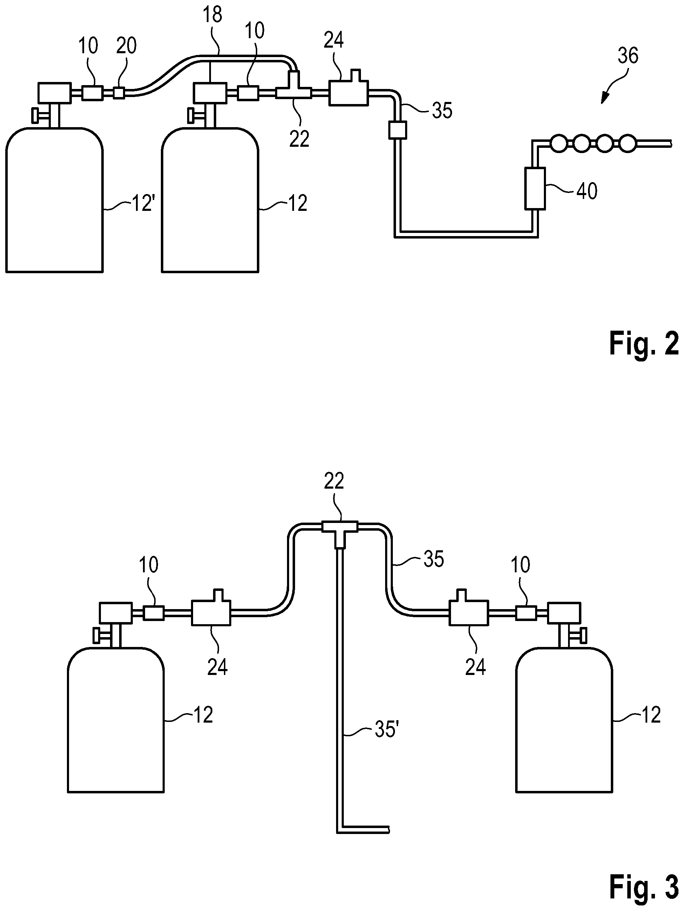

In Figur 2 ist eine Flüssiggasanlage gemäß einer zweiten Ausführungsform gezeigt. Für die von der ersten Ausführungsform bekannten Bauteile werden dieselben Bezugszeichen verwendet, und es wird insoweit auf die obigen Erläuterungen verwiesen.

Bei der zweiten Ausführungsform wird an die erste Gasflasche 12 unmittelbar der Gasfernschalter 10 angeschlossen, an den mittels eines T-Stücks 22 der Gasdruckregler 24 angeschlossen ist.

An den Gasdruckregler 24 schließt sich stromabwärts eine Niederdruckleitung 35 an, die über eine Filtereinheit 40 zum Verteilerblock 36 führt.

Die zweite Gasflasche (hier zur Unterscheidung mit dem Bezugszeichen 12' versehen) ist an den zweiten Eingang des T-Stücks 22 mittels eines Hochdruckschlauchs 18 angeschlossen, der eine Schlauchbruchsicherung 20 aufweist und an den Ausgang eines weiteren Gasfernschalters 10 angeschlossen ist. Der Gasfernschalter 20 ist auch bei der zweiten Gasflasche 12' unmittelbar an dieser montiert, ohne dass es eine Schlauchverbindung zwischen der Gasflasche 12' und dem Gasfernschalter 10 gibt.

In Abhängigkeit von den jeweiligen Sicherheitsanforderungen kann unter Umständen auch auf die Schlauchbruchsicherung verzichtet werden.

Insgesamt ergibt sich eine Flüssiggasanlage, die sich durch einen einfachen Aufbau bei gleichzeitig hoher Betriebssicherheit auszeichnet.

Die weiteren Bestandteile der Flüssiggasanlage wie die Steuerung etc. sind in Figur 2 nicht dargestellt.

In Figur 3 ist eine Flüssiggasanlage gemäß einer dritten Ausführungsform gezeigt. Für die von den vorhergehenden Ausführungsformen bekannten Bauteile werden dieselben Bezugszeichen verwendet, und es wird insoweit auf die obigen Erläuterungen verwiesen.

Bei der dritten Ausführungsform ist an jeder Gasflasche 12 ein Gasfernschalter 10 angebracht, auf den ein Gasdruckregler 24 folgt. Die Ausgänge der beiden Gasdruckregler 24 sind über Niederdruckschläuche 35 an die beiden Eingänge eines T-Stücks 22 angeschlossen, von dem aus ein weiterer Niederdruckschlauch 35' zu einer (hier nicht mehr gezeigten) Filtereinheit und anschließend zum Verteilerblock führt.

Der Vorteil der dritten Ausführungsform besteht darin, dass kein Hochdruckschlauch verwendet wird.

## Patentansprüche

1. Flüssiggasanlage für mobile Anwendungen, mit mindestens einem Gasfernschalter (10), der an einer Flüssiggasflasche (12) montierbar ist, einem Gasdruckregler (24), an dessen Hochdruckeingang der Gasfernschalter (10) angeschlossen ist, einem Verteilerblock (36), dessen Eingang an den Niederdruckausgang des Gasdruckreglers (24) angeschlossen ist, einer Filtereinheit (40), die zwischen dem Niederdruckausgang des Gasdruckreglers (24) und dem Verteilerblock (36) angeordnet ist, und einer elektronischen Steuerung (16), die mit dem Gasfernschalter (10) in Verbindung steht, **dadurch gekennzeichnet, dass** auf der Niederdruckseite der Flüssiggasanlage ein Heizelement (32) und ein Sensor (34) vorgesehen sind, wobei der Sensor ein Temperatursensor (34) ist, und wobei in der Steuerung verschiedene Abkühlkurven (60) hinterlegt sind und die Steuerung (16) eine gemessene Abkühlkurve mit den hinterlegten Abkühlkurven vergleichen kann, um die Flüssiggasanlage auf Dichtigkeit zu prüfen.

2. Flüssiggasanlage nach Anspruch 1, **dadurch gekennzeichnet, dass** die Filtereinheit (40) einen Einwegfilter (42) enthält.

3. Flüssiggasanlage nach Anspruch 2, **dadurch gekennzeichnet, dass** der Einwegfilter eine Filterpatrone (42) ist.

4. Flüssiggasanlage nach einem der Ansprüche 2 und 3, **dadurch gekennzeichnet, dass** ein Sensor (50) für die Verschmutzung des Einwegfilters (42) vorgesehen ist.

5. Flüssiggasanlage nach Anspruch 4, **dadurch gekennzeichnet, dass** der Verschmutzungssensor (50) einen RFID-Chip enthält, der in den Einwegfilter (42) integriert ist.

6. Flüssiggasanlage nach einem der Ansprüche 4 und 5, **dadurch gekennzeichnet, dass** der Verschmutzungssensor (50) mit der Steuerung (16) in Verbindung steht.

7. Flüssiggasanlage nach einem der vorhergehenden Ansprüche, **dadurch gekennzeichnet, dass** die Filtereinheit (40) in den Verteilerblock (36) integriert ist.

8. Flüssiggasanlage nach einem der vorhergehenden Ansprüche, **dadurch gekennzeichnet, dass** auf der Hochdruckseite der Flüssiggasanlage ein zweiter Hochdruckschlauch (18) angeschlossen ist, der zu einem zweiten Gasfernschalter (10) führt.

9. Flüssiggasanlage nach Anspruch 8, **dadurch gekennzeichnet, dass** die beiden Hochdruckschläuche (18) an die beiden Eingänge eines T-Stücks (22) angeschlossen sind, dessen Ausgang an den Hochdruckeingang des Gasdruckreglers (24) angeschlossen ist.

10. Flüssiggasanlage nach einem der vorhergehenden Ansprüche, **dadurch gekennzeichnet, dass** ein elektronischer Crashsensor (54) vorgesehen ist, der mit der Steuerung (16) in Verbindung steht.

11. Flüssiggasanlage nach einem der Ansprüche 1 bis 9, **dadurch gekennzeichnet, dass** eine Crashsignal-Schnittstelle vorgesehen ist, über die die Flüssiggasanlage Zugriff auf das Crashsignal eines fahrzeugseitigen Crashsensors hat.

12. Flüssiggasanlage nach einem der vorhergehenden Ansprüche, **dadurch gekennzeichnet, dass** ein Füllstandsmesser (56) vorgesehen ist.

13. Flüssiggasanlage nach Anspruch 12, **dadurch gekennzeichnet, dass** de Füllstandsmesser (56) mit der Steuerung (16) in Verbindung steht.

14. Flüssiggasanlage nach einem der vorhergehenden Ansprüche, **dadurch gekennzeichnet, dass** am Gasdruckregler (24) eine Heizvorrichtung (26) vorgesehen ist, die mit der Steuerung (16) verbunden ist.

15. Flüssiggasanlage nach Anspruch 14, **dadurch gekennzeichnet, dass** der Heizvorrichtung (26) ein Temperatursensor (28) zugeordnet ist, der mit der Steuerung verbunden ist.

16. Flüssiggasanlage nach einem der vorhergehenden Ansprüche, **dadurch gekennzeichnet, dass** die Steuerung (16) eine Nahfeldkommunikationsschnittstelle (62) aufweist.

17. Flüssiggasanlage nach einem der vorhergehenden Ansprüche, **dadurch gekennzeichnet, dass** die Steuerung (16) eine Fernkommunikationsschnittstelle (64) aufweist.

18. Flüssiggasanlage nach einem der vorhergehenden Ansprüche, **dadurch gekennzeichnet, dass** der Gasfernschalter (10) unmittelbar an den Eingang des Gasdruckreglers (24) angeschlossen ist.

19. Flüssiggasanlage nach einem der vorhergehenden Ansprüche, **dadurch gekennzeichnet, dass** der Gasfernschalter (10) mittels eines Hochdruckschlauchs (18) an den Eingang des Gasdruckreglers (24) angeschlossen ist.

20. Flüssiggasanlage nach Anspruch 19, **dadurch gekennzeichnet, dass** der Hochdruckschlauch (18) eine Schlauchbruchsicherung (20) aufweist.

## Claims

1. A liquefied petroleum gas system for mobile applications, comprising at least one gas remote switch (10) adapted to be mounted to a liquefied petroleum gas cylinder (12), a gas pressure regulator (24) to the high pressure input of which the gas remote switch (10) is connected, a distributor block (36) the input of which is connected to the low pressure output of the gas pressure regulator (24), a filter unit (40) which is arranged between the low pressure output of the gas pressure regulator (24) and the distributor block (36), and an electronic controller (16) which communicates with the gas remote switch (10), **characterized in that** a heating element (32) and a sensor (34) are provided on the low pressure side of the liquefied petroleum gas system, the sensor being a temperature sensor (34), and various cooling curves (60) being stored in the controller, and the controller (16) being adapted to compare a measured cooling curve with the stored cooling curves in order to check the liquefied petroleum gas system for tightness.

2. The liquefied petroleum gas system according to claim 1, **characterized in that** the filter unit (40) contains a disposable filter (42).

3. The liquefied petroleum gas system according to claim 2, **characterized in that** the disposable filter is a filter cartridge (42).

4. The liquefied petroleum gas system according to either of claims 2 and 3, **characterized in that** a sensor (50) for the contamination of the disposable filter (42) is provided.

5. The liquefied petroleum gas system according to claim 4, **characterized in that** the contamination sensor (50) contains an RFID chip which is integrated in the disposable filter (42).

6. The liquefied petroleum gas system according to either of claims 4 and 5, **characterized in that** the contamination sensor (50) communicates with the controller (16).

7. The liquefied petroleum gas system according to any of the preceding claims, **characterized in that** the filter unit (40) is integrated in the distributor block (36).

8. The liquefied petroleum gas system according to any of the preceding claims, **characterized in that** a second high-pressure hose (18), which leads to a second gas remote switch (10), is connected on the high-pressure side of the liquefied petroleum gas system.

9. The liquefied petroleum gas system according to claim 8, **characterized in that** the two high-pressure hoses (18) are connected to the two inputs of a T-piece (22), the output of which is connected to the high-pressure input of the gas pressure regulator (24).

10. The liquefied petroleum gas system according to any of the preceding claims, **characterized in that** an electronic crash sensor (54) is provided, which communicates with the controller (16).

11. The liquefied petroleum gas system according to any of claims 1 to 9, **characterized in that** a crash signal interface is provided, via which the liquefied petroleum gas system has access to the crash signal of a vehicle-side crash sensor.

12. The liquefied petroleum gas system according to any of the preceding claims, **characterized in that** a filling level meter (56) is provided.

13. The liquefied petroleum gas system according to claim 12, **characterized in that** the filling level meter (56) communicates with the controller (16).

14. The liquefied petroleum gas system according to any of the preceding claims, **characterized in that** a heating device (26) which is connected to the controller (16) is provided at the gas pressure regulator (24).

15. The liquefied petroleum gas system according to claim 14, **characterized in that** a temperature sensor (28) which is connected to the controller is associated with the heating device (26).

16. The liquefied petroleum gas system according to any of the preceding claims, **characterized in that** the controller (16) includes a near-field communication interface (62).

17. The liquefied petroleum gas system according to any of the preceding claims, **characterized in that** the controller (16) includes a remote communication interface (64).

18. The liquefied petroleum gas system according to any of the preceding claims, **characterized in that** the gas remote switch (10) is directly connected to the input of the gas pressure regulator (24).

19. The liquefied petroleum gas system according to any of the preceding claims, **characterized in that** the gas remote switch (10) is connected to the input of the gas pressure regulator (24) by means of a high-pressure hose (18).

20. The liquefied petroleum gas system according to claim 19, **characterized in that** the high-pressure hose (18) includes a hose rupture valve (20).

## Revendications

1. Installation de gaz de pétrole liquéfié pour des applications mobiles, comprenant au moins un interrupteur de gaz commandé à distance (10) apte à être monté sur une bouteille de gaz de pétrole liquéfié (12), un régulateur de pression de gaz (24) à l'entrée haute pression duquel l'interrupteur de gaz commandé à distance (10) est raccordé, un bloc de distribution (36) dont l'entrée est raccordée à la sortie basse pression du régulateur de pression de gaz (24), une unité de filtration (40) agencée entre la sortie basse pression du régulateur de pression de gaz (24) et le bloc de distribution (36), et une commande électronique (16) communiquant avec l'interrupteur de gaz commandé à distance (10), **caractérisée en ce qu'**un élément chauffant (32) et un capteur (34) sont prévus du côté basse pression de l'installation de gaz de pétrole liquéfié, le capteur étant un capteur de température (34), et différentes courbes de refroidissement (60) étant enregistrées dans la commande, et la commande (16) étant apte à comparer une courbe de refroidissement mesurée aux courbes de refroidissement enregistrées pour vérifier l'étanchéité de l'installation de gaz de pétrole liquéfié.

2. Installation de gaz de pétrole liquéfié selon la revendication 1, **caractérisée en ce que** l'unité de filtration (40) contient un filtre à usage unique (42).

3. Installation de gaz de pétrole liquéfié selon la revendication 2, **caractérisée en ce que** le filtre à usage unique est une cartouche de filtre (42).

4. Installation de gaz de pétrole liquéfié selon l'une des revendications 2 et 3, **caractérisée en ce qu'**il est prévu un capteur (50) pour l'encrassement du filtre à usage unique (42).

5. Installation de gaz de pétrole liquéfié selon la revendication 4, **caractérisée en ce que** le capteur d'encrassement (50) contient une puce RFID qui est intégrée dans le filtre à usage unique (42).

6. Installation de gaz de pétrole liquéfié selon l'une des revendications 4 et 5, **caractérisée en ce que** le capteur d'encrassement (50) communique avec la commande (16).

7. Installation de gaz de pétrole liquéfié selon l'une des revendications précédentes, **caractérisée en ce que** l'unité de filtration (40) est intégrée dans le bloc de distribution (36).

8. Installation de gaz de pétrole liquéfié selon l'une des revendications précédentes, **caractérisée en ce qu'**un deuxième tuyau haute pression (18) menant à un deuxième interrupteur de gaz commandé à distance (10) est raccordé du côté haute pression de l'installation de gaz de pétrole liquéfié.

9. Installation de gaz de pétrole liquéfié selon la revendication 8, **caractérisée en ce que** les deux tuyaux haute pression (18) sont raccordés aux deux entrées d'une pièce en T (22), dont la sortie est raccordée à l'entrée haute pression du régulateur de pression de gaz (24).

10. Installation de gaz de pétrole liquéfié selon l'une des revendications précédentes, **caractérisée en ce qu'**il est prévu un capteur de collision électronique (54) qui communique avec la commande (16).

11. Installation de gaz de pétrole liquéfié selon l'une des revendications 1 à 9, **caractérisée en ce qu'**il est prévu une interface de signal de collision par l'intermédiaire de laquelle l'installation de gaz de pétrole liquéfié a accès au signal de collision d'un capteur de collision côté véhicule.

12. Installation de gaz de pétrole liquéfié selon l'une des revendications précédentes, **caractérisée en ce qu'**il est prévu un moyen de mesure de niveau (56).

13. Installation de gaz de pétrole liquéfié selon la revendication 12, **caractérisée en ce que** le moyen de mesure de niveau (56) communique avec la commande (16).

14. Installation de gaz de pétrole liquéfié selon l'une des revendications précédentes, **caractérisée en ce qu'**un dispositif de chauffage (26) relié à la commande (16) est prévu sur le régulateur de pression de gaz (24).

15. Installation de gaz de pétrole liquéfié selon la revendication 14, **caractérisée en ce qu'** un capteur de température (28) relié à la commande est associé au dispositif de chauffage (26).

16. Installation de gaz de pétrole liquéfié selon l'une des revendications précédentes, **caractérisée en ce que** la commande (16) présente une interface de communication en champ proche (62).

17. Installation de gaz de pétrole liquéfié selon l'une des revendications précédentes, **caractérisée en ce que** la commande (16) présente une interface de communication à distance (64).

18. Installation de gaz de pétrole liquéfié selon l'une des revendications précédentes, **caractérisée en ce que** l'interrupteur de gaz commandé à distance (10) est directement raccordé à l'entrée du régulateur de pression de gaz (24).

19. Installation de gaz de pétrole liquéfié selon l'une des revendications précédentes, **caractérisée en ce que** l'interrupteur de gaz commandé à distance (10) est raccordé à l'entrée du régulateur de pression de gaz (24) au moyen d'un tuyau haute pression (18).

20. Installation de gaz de pétrole liquéfié selon la revendication 19, **caractérisée en ce que** le tuyau haute pression (18) présente une protection (20) contre une rupture de tuyau.
